Europäisches Patentamt

European Patent Office

Office européen des brevets

(19)

(11) Veröffentlichungsnummer: **0 401 694**

**A1**

## (12) EUROPÄISCHE PATENTANMELDUNG

(21) Anmeldenummer: **90110438.0**

(22) Anmeldetag: **01.06.90**

(51) Int. Cl.5: **G01B 9/02**

(30) Priorität: **07.06.89 AT 1393/89**

(43) Veröffentlichungstag der Anmeldung:
**12.12.90 Patentblatt 90/50**

(84) Benannte Vertragsstaaten:
**DE FR GB IT SE**

(71) Anmelder: **Tabarelli, Werner, Dr.**
**Im Garsill 33**
**FL-9494 Schaan(LI)**

(72) Erfinder: **Tabarelli, Werner, Dr.**
**Im Garsill 33**
**FL-9494 Schaan (Liechtenstein)(LI)**
Erfinder: **Lazecki, René**
**Heldaustrasse 61**
**CH-9470 Buchs(CH)**

(74) Vertreter: **Torggler, Paul, Dr. et al**
**Wilhelm-Greil-Strasse 16**
**A-6020 Innsbruck(AT)**

(54) **Interferometeranordnung.**

(57) Interferometeranordnung, insbesondere zur Entfernungs- bzw. Verschiebewegbestimmung eines beweglichen Bauteiles, mit einer Laserdiode als Lichtquelle, mit wenigstens einem Interferometerkopf (1), der zumindest einen Strahlteiler (7) zur Aufteilung von aus der Laserdiode (2) stammendem Licht in einen Meßstrahl und einen Referenzstrahl und eine Rekombinationseinrichtung (15) enthält, an der der über Referenzstrecke geführte Referenzstrahl und der über einen beweglichen Meßspiegel (12) geführte Meßstrahl interferieren. Um unerwünschte Rückkopplungen von Laserlicht in die Laserdiode (2) auszuschalten, ist zwischen Laserdiode (2) und Inteferometerkopf (1) eine flexible Lichtleitfaser (32) mit einer optischen Länge von mindestens einem Meter angeordnet, über welche dem Interferometerkopf (1) von der Laserdiode (2) emittiertes Licht zugeführt wird. Zur Erleichterung der Handhabung ist ein erster Faserverbinder (37) vorgesehen, um das lichtquellenseitige Ende der Lichtleitfaser (32) mit einer Licht aus der Laserdiode (2) führenden Lichtleitfaser (38) lösbar zu verbinden. Außerdem ist ein zweiter Faserverbinder (40) vorgesehen, um das interferometerkopfseitige Ende der Lichtleitfaser (32) mit einer im Interferometerkopf (1) verlaufenden Lichtleitfaser (6) lösbar zu verbinden.

Fig. 1

EP 0 401 694 A1

Die Erfindung betrifft eine Interferometeranordnung, insbesondere zur Entfernungs- bzw. Verschiebewegbestimmung eines beweglichen Bauteiles, mit einer Laserdiode als Lichtquelle, mit wenigstens einem Interferometerkopf, der zumindest einen Strahlteiler zur Aufteilung von aus der Laserdiode stammendem Licht in einen Meßstrahl und einen Referenzstrahl und eine Rekombinationseinrichtung enthält, an der der über Referenzstrecke geführte Referenzstrahl und der über einen beweglichen Meßspiegel geführte Meßstrahl interferieren, und mit einer wenigstens einen Photodetektor aufweisenden Detektoreinrichtung zur Analyse zumindest eines aus der Rekombinationseinrichtung stammenden optischen Interferenzsignals.

Es wurde bereits mehrfach vorgeschlagen, bei Interferometeranordnungen Laserdioden aufgrund ihrer günstigen Eigenschaften (geringe Abmessungen, kostengünstig, etc.) als Lichtquellen zu verwenden. Die Laserdioden sind dabei in den eigentlichen Interferometerkopf integriert und so ein Interferometer mit insgesamt kompakten Abmessungen zu erhalten. Neben dem Umstand, daß sich damit thermische Probleme ergeben können, wurde bisher auch der Tatsache keine Beachtung geschenkt, daß Laserdioden sehr empfindlich auf in den Laserresonator zurückgekoppeltes Licht reagieren. Durch nicht kontrollierbare Rückkopplungen aus dem Interferometer in die Laserdiode kann es zu Störeinflüssen kommen, die die Emissionswellenlänge der Laserdiode unkontrollierbar beeinflussen. Bei Interferometern muß man aber sehr hohe Anforderungen an die relative Wellenlängengenauigkeit stellen, um zufriedenstellende Meßergebnisse in metrischen Einheiten zu erzielen.

Aufgabe der Erfindung ist es, eine für die industrielle Wegmessung geeignete, robuste und einfach handzuhabende Interferometeranordnung zu schaffen, die mit einer Laserdiode als Lichtquelle betrieben ist und einen oder mehrere kompakte Interferometerköpfe aufweist. Weiters sollen durch unkontrollierbare Rückkopplungen in die Laserdiode keine störenden Auswirkungen auf die Emissionswellenlänge der Laserdiode auftreten.

Dies wird erfindungsgemäß dadurch erreicht, daß zwischen Laserdiode und jedem Interferometerkopf eine flexible Lichtleitfaser mit einer optischen Länge von mindestens einem Meter angeordnet ist, über welche dem jeweiligen Interferometerkopf von der Laserdiode emittiertes Licht zugeführt wird, daß für jede Lichtleitfaser ein erster Faserverbinder vorgesehen ist, um das lichtquellenseitige Ende der Lichtleitfaser mit einer Licht aus der Laserdiode führenden Lichtleitfaser lösbar zu verbinden, und daß für jede Lichtleitfaser ein zweiter Faserverbinder vorgesehen ist, um das interferometerkopfseitige Ende der Lichtleitfaser mit einer zum bzw. im jeweiligen Interferometerkopf verlaufenden Lichtleitfaser lösbar zu verbinden.

Der Einsatz von Lichtleitfasern bei interferometrischen Einrichtungen ist zwar an sich bekannt, so z.B. aus der US-PS 4,153,370, wo eine Interferometeranordnung beschrieben ist, bei der Lichtleitfaserstücke vorgesehen sind, um den in einem Gehäuse untergebrachten Interferometerkopf mit einer Lichtquelle und mit einer Detektoreinrichtung zur Erfassung und Auswertung der optischen Interferenzsignale außerhalb dieses Interferometerkopfgehäuses zu verbinden Die Lichtleitfaserstücke, über deren optische Länge sich der genannten Druckschrift nichts entnehmen läßt, sind jedoch ständig mit dem Interferometerkopfgehäuse bzw. der Detektoreinrichtung und der Lichtquelle verbunden. Damit läßt sich die bekannte Interferometeranordnung in der Praxis nur schwer handhaben. Beispielsweise ist eine einfache Ver legung der fix angeschlossenen Lichtleitfaser und ein Austausch beschädigter Lichtleitfaserstücke nur schwer möglich. Außerdem kommt dort im Gegensatz zur erfindungsgemäßen Interferometeranordnung ein wesentlich teurer und in den Abmessungen größerer Helium-Neon-Laser als Lichtquelle zum Einsatz.

Die erfindungsgemäße Interferometeranordnung verwendet eine kostengünstige und kleine Laserdiode als Lichtquelle. Zur Vermeidung von störenden Rückreflexionen in die Laserdiode ist zwischen jedem Interferometerkopf und der Laserdiode eine flexible Lichtleitfaser angeordnet, deren optische Länge (geometrische Länge x Brechzahl des Faserkerns) größer als ein Meter ist. Der Erfindung liegt die Überlegung zugrunde, daß sich zwischen je zwei Reflexstellen, insbesondere zwischen der Außenfläche des Laserdiodenchips und irgendeiner reflektierenden Fläche im Interferometerkopf ein "Quasi-Etalon" ausbildet, aus dem bevorzugt bestimmte Wellenlängen in den Laserresonator zurückgekoppelt werden, auf die die Laserdiode reagieren (einrasten) könnte. Wenn nun der Wellenlängenabstand dieser zurückgekoppelten Reflexionsmaxima aus dem "Quasi-Etalon" kleiner als die zugelassene Wellenlängenungenauigkeit $\Delta \lambda$ ist, so hat das zurückgekoppelte Licht im Rahmen der zugelassenen Wellenlängenungenauigkeit keinen Einfluß auf die Emissionswellenlänge. Je größer die Länge des Quasi-Etalons ist, um so enger rücken die Reflexionsmaxima zusammen und man erhält eine quasikontinuierliche Rückkopplung. Dies läßt sich durch den folgenden formelmäßigen Zusammenhang ausdrücken:

$$L_{OPT} \geqslant \frac{\lambda}{\left( \frac{\Delta \lambda}{\lambda} \right)}$$

wobei $L_{opt}$ die optische Länge des Quasi-Etalons ist, $\lambda$ die Emissionswellenlänge der Laserdiode und $(\Delta\lambda/\lambda)$ die relative Wellenlängenunsicherheit ist. Erfindungsgemäß wird durch hinreichend lange Lichtleitfasern eine entsprechend große optische Länge des Quasi-Etalons erzielt. Bei den typischen, im nahen Infrarotbereich liegenden Emissionswellenlängen der Laserdioden erzielt man mit Lichtleitfasern von einer optischen Länge von mindestens einem Meter, daß das in die Laserdiode zurückgekoppelte Licht etwa im Rahmen einer Wellenlängen ungenauigkeit von $5 \times 10^{-7}$ keinen Einfluß auf die Emissionswellenlänge hat. Aus dem oben genannten formelmäßigen Zusammenhang ist klar ersichtlich, daß bei größeren verwendeten Emissionswellenlängen und bei kleineren zugelassenen relativen Wellenlängenunsicherheiten die optische Länge der Lichtleitfaser(n) größer sein muß. Mit einer optischen Länge der zwischen Laserdiode und Interferometerkopf bzw. den Interferometerköpfen angeordneten Lichtleitfaser(n) von mindestens fünf, vorzugsweise mindestens zehn Metern, läßt sich der störende Einfluß von Rückkopplungen in die Laserdiode praktisch vollkommen ausschalten.

Um die Handhabung der Interferometeranordnung mit derart langen Lichtleiterkabeln, die neben dem oben genannten Effekt auch noch eine thermische Entkopplung von Lichtquelle und Interferometerkopf mit sich bringen, zu erleichtern, ist jede Lichtleitfaser beidseitig über einen lösbaren Faserverbinder angeschlossen. Die Lichtleitfasern können damit rasch und einfach verlegt werden und im Falle einer Beschädigung auch schnell ausgetauscht werden. Außerdem ist damit eine rasche Anpassung in der Länge an die optischen Anforderungen sowie an die örtlichen Gegebenheiten möglich.

Um störende Rückreflexionen in die Laserdiode aus den lichtquellenseitigen Faserverbindern zu vermeiden, bestehen gemäß bevorzugten Ausführungsformen der Erfindung mehrere Möglichkeiten: beispielsweise ist es möglich, die Endfläche der von der Lichtquelle abgewandten Lichtleitfaser im lichtquellenseitigen Faserverbinder schräg anzuschleifen, sodaß diese Endfläche einen spitzen Winkel mit der Normalebene auf die Faserrichtung einschließt. Damit wird erzielt, daß der Reflex nicht in die zur Laserdiode führende Faser eingekoppelt wird. Andere Möglichkeiten sind die Verwendung einer entspiegelnden Schicht auf der Endfläche der von der Lichtquelle abgewandten Lichtleitfaser im lichtquellenseitigen Faserverbinder oder die Verwendung einer Indexflüssigkeit zwischen den Endflächen der jeweils zu verbindenden Lichtleitfasern. Außerdem kann man allfällige Reflexe aus dem lichtquellenseitigen Faserverbinder auch dadurch unschädlich machen, daß man das zwischen Laserdiode und Faserverbinder liegende "Quasi-Etalon" entsprechend der erfindungsgemäßen Idee hinreichend lang macht. Dies ist einfach dadurch möglich, daß von der Laserdiode aus bis zum nächstliegenden Faserverbinder eine Lichtleitfaser mit einer optischen Länge von mindestens einem Meter, vorzugsweise mindestens 10 Meter, angeordnet ist. Diese Lichtleitfaser kann beispielsweise in einem Lichtquellengehäuse, in dem die Laserdiode samt Versorgungseinheiten untergebracht ist, zumindest teilweise spulenförmig aufgewickelt sein. Selbstverständlich ist es auch möglich, die zum Interferometerkopf führende, zwischen den beiden Faserverbindern liegende Dichtleitfaser zumindest teilweise spulenförmig aufzuwickeln, wenn zur Vermeidung von störenden Rückkopplungen in die Laserdiode eine lange Lichtleitfaser angebracht ist und gleichzeitig eine räumliche Nähe zwischen Interferometerkopf und Laserdiode günstig ist.

Als Faserverbinder eignen sich insbesondere lösbare zweiteilige Steckverbinder, wobei an den beiden zu verbindenden Faserenden jeweils ein Steckerteil angebracht ist und die beiden Steckerteile mechanisch genau zueinander justiert miteinander lösbar verbunden werden können. Bei dieser mechanischen Verbindung treten die beiden Faserenden genau zueinander justiert gegenüber, sodaß auch eine optische Verbindung hergestellt ist. Im Hinblick darauf, daß eine Lichtführung in den Interferometerköpfen in monomoden Glasfasern (Einmoden-Wellenleitern) besonders günstig ist, ist es aus optischer Sicht sicherlich auch vorteilhaft, wenn die zum Interferometerkopf bzw. zu den Interferometerköpfen führende Lichtleitfaser(n) jeweils eine monomode Glasfaser ist. Bei der Verbindung solcher Glasfasern, deren Durchmesser im Mikrometerbereich liegt, sind hohe Anforderungen an die relative Justierung der beiden zu verbindenden Glasfasern und damit an die Genauigkeit des Faserverbinders gestellt. Wenngleich solche Faserverbinder für monomode Glasfasern bereits zur Verfügung stehen, ist es zur Vermeidung von Justierungsproblemen in den Faserverbindern gemäß einer alternativen Ausführungsform der Erfindung günstig, wenn die zum Interferometerkopf bzw. den Interferometerköpfen führende Lichtleitfaser jeweils eine multimode Lichtleitfaser, insbesondere eine Kunststoff-Lichtleitfaser ist. Diese flexiblen Kunststoff-Lichtleitfasern weisen ei Durchmesser von etwa 1 mm auf und sind daher ents unkritisch zu verbinden. Werden im Interferome monomode Lichtleitern verwendet, in denen sich d mit klar definierten Wellenfronten ausbreitet, so bei der Verwendung von Kunststoff-Lichtleitfasern zu Lichtführung zum Interferometerkopf eine Kopplungseinrichtung nötig, um Licht aus der Kunststoff-Lichtleitfaser in einen monomoden Lichtleiter des Interferometerkopfs einzukoppeln. Gemäß einer bevorzugten Ausführungsform der Erfindung kann vorgesehen sein, daß die Kopplungseinrichtung eine Linse(nanordnung) aufweist, die das aus der Kunststoff-Lichtleitfaser divergent austretende Licht auf die Eintrittsfläche des monomoden Lichtleiters fokussiert. Eine andere Ausführungsform sieht vor, daß sich der Durchmesser der Kunststoff-Lichtleitfaser im Bereich der Kopplungseinrichtung in etwa auf den Durchmesser des monomoden Lichtleiters verringert

Im Hinblick auf eine einfache Handhabung und Justierfreundlichkeit ist es günstig, wenn jeder Interferometerkopf ein Gehäuse aufweist und der interferometerseitige Teil des zweiteilig ausgeführten Faserverbinders jeweils an diesem Gehäuse fest angebracht ist. Die optischen Komponenten des Interferometerkopfs und die am Gehäuse angebrachte Hälfte des Faserverbinders können fix zueinander vorjustiert sein. Zur Justage an Ort und Stelle muß daher nur mehr sichergestellt werden, daß der aus dem Interferometerkopf austretende Meßstrahl vom Meßspiegel, der beispielsweise an einem Maschinenbauteil befestigt sein kann, wieder richtig justiert in den Interferometerkopf zurückgeführt wird, wo er zur Erzeugung des Interferenzsignals mit dem Referenzstrahl überlagert wird. Diese Justage wird durch Verwendung eines Retroreflektors und die Einkopplung in eine gesonderte monomode Faser des Interferometerkopfes über eine gesonderte Linsenanordnung vereinfacht. ·

Auch der lichtquellenseitige Faserverbinder kann zweiteilig ausgeführt sein, wobei der lichtquellenseitige Teil günstigerweise an einem die Laserdiode umgebenden Gehäuse bzw. einem Gehäuse eines·Lichtverteilers angebracht ist. Eine bevorzugte Ausführungsform der Erfindung sieht vor, daß pro Interferometerkopf mindestens eine über Faserverbinder lösbar angeschlossene Kunststoff-Lichtleitfaser zur Übertragung optischer Interferenzsignale zur vom Interferometerkopf räumlich getrennten, mit mindestens einem Photodetektor und einer Auswertelektronik versehenen und vorzugsweise in einem Gehäuse untergebrachten Detektoreinrichtung vorgesehen ist. Damit lassen sich Störeinflüsse, die bei einer elektrischen Übertragung von Signalen im Megahertz-Bereich auftreten, vermeiden. Außerdem sind damit ungünstige Temperatureinflüsse der Auswertelektronik, die häufig mit höheren Betriebstemperaturen arbeitet (ECL-Logik), auf die Interferometerköpfe vermeidbar. Die an sich bekannte Übertragung von hochfrequenten Signalen in Lichtleitfasern läßt sich mit der erfindungsgemäßen Lichtzuführung zum Interferometerkopf günstig dadurch kombinieren, daß die Licht zum Interferometerkopf führende Lichtleitfaser und die vom Interferometerkopf aus Interferenzsignale übertragende(n) multimoden Lichtleitfaser(n) (insbesondere aus Kunststoff) zu einem Faserkabel mit einem die Lichtleitfasern umgebenden Mantel zusammengefaßt sind. Ein solches, mehrere Lichtleitfasern enthaltende Faserkabel kann beidseitig über eine zweiteilige lösbare Mehrfachkupplung zur gleichzeitigen Verbindung der Lichtleitfasern anschließbar sein.

Die eingangs erwähnte Eigenschaft von Laserdioden, auf zurückgekoppeltes Licht empfindlich zu reagieren, kann auch dazu benutzt werden, Emissionsfrequenz der Laserdiode durch frequenzselektive optische Rückkopplung in Abhängigkeit von der im Umgebungsmedium vorhandenen Brechzahl derart zu regeln, daß die im Umgebungsmedium vorhandene Wellenlänge und damit der interferometrische Maßstab konstant bleibt. Eine derartige geeignete Rückkopplung kann man beispielsweise aus einem Etalon erhalten, zwischen dessen Spiegelflächen sich das Umgebungsmedium befindet. Bei Verwendung einer derartigen optischen Rückkopplung zur Regelung der Laserdiode tritt der oben beschriebene "Quasi-Etalon"-Effekt mit dem gewollt in den Laserresonator zurückgekoppelten Licht in Konkurrenz und es ist daher besonders wichtig, unkontrollierte Rückkopplungseffekte durch die Verwendung von Lichtleitfasern, deren optische Länge größer als 1 m ist, auszuschalten.

Weitere Einzelheiten und Vorteile der Erfindung werden in der folgenden Figurenbeschreibung näher erläutert.

Es zeigen die

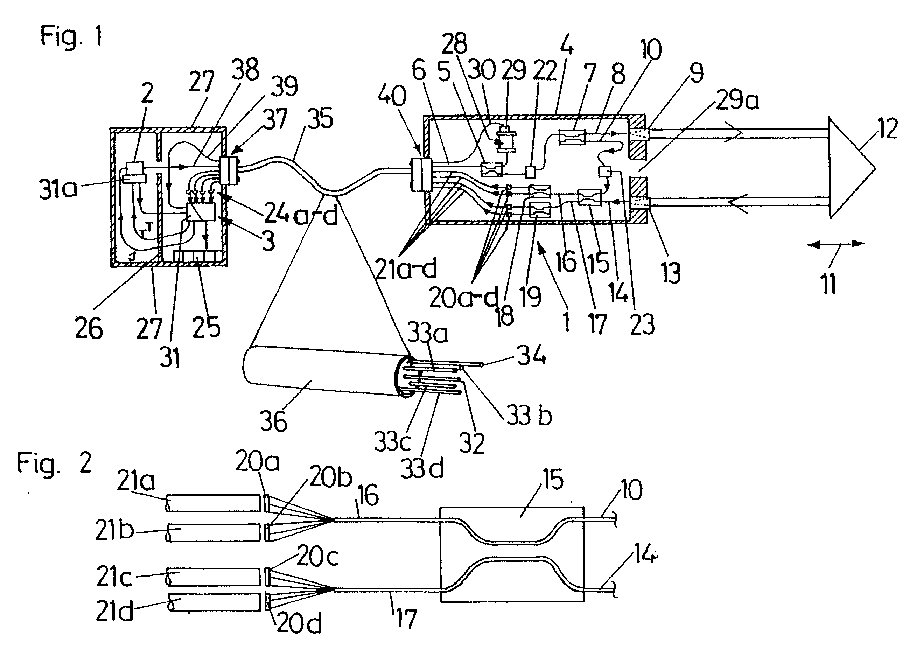

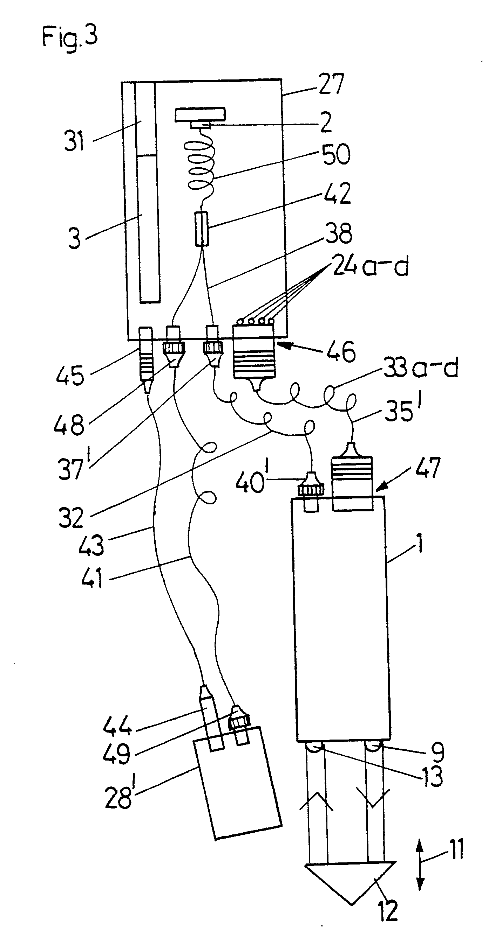

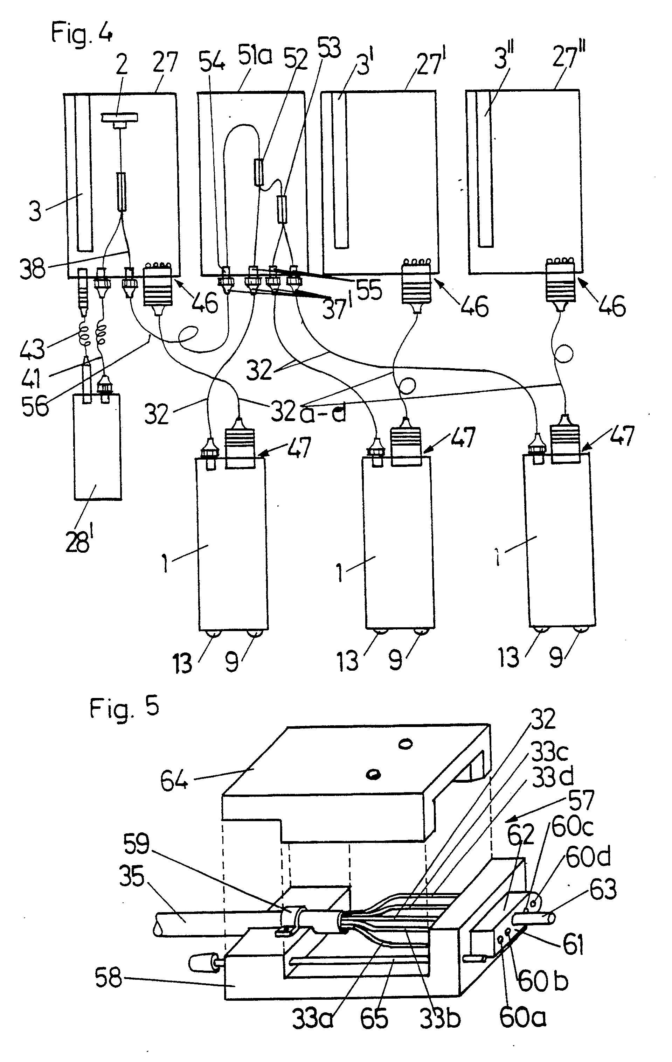

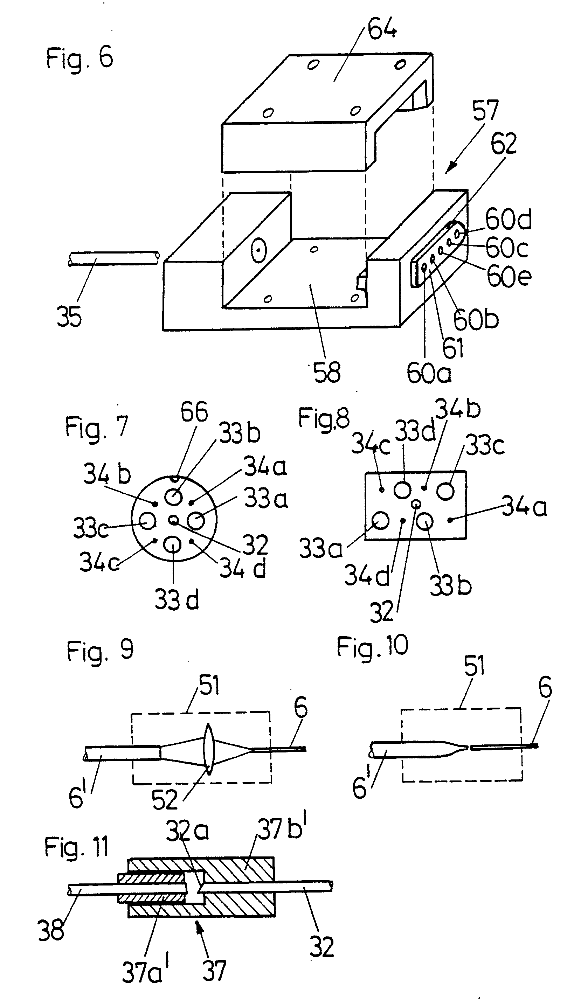

Fig. 1 eine schematische Darstellung eines Ausführungsbeispiels der erfindungsgemäßen Interferometeranordnung, bei der ein Teil des zum bzw. vom Interferometerkopf führenden Lichtfaserkabels vergrößert dargestellt ist, die Fig. 2 eine Variante der Einkopplung von Licht aus der Rekombinationseinrichtung in die zur Detektoreinrichtung führenden Kunststoff-Lichtleitfasern, die Fig. 3 eine schematische Ansicht eines weiteren Aufführungsbeispiels der erfindungsgemäßen Interferometeranordnung mit einem Interferometerkopf, die Fig. 4 eine schematische Darstellung eines Ausführungsbeispiels der erfindungsgemäßen Interferometeranordnung mit drei Interferometerköpfen, die Figuren 5 und 6 schematische Darstellungen einer Hälfte eines zweiteiligen Mehrfach faserverbinders, die Fig. 7 und 8 schematische Querschnitte durch weitere Ausführungsformen einer Mehrfachkupplung, die Fig. 9 und 10 Ausführungsbeispiele für den Übergang von einer Kunststoff-Lichtleitfaser auf eine monomode Glasfaser und die Fig. 11 eine schematische Darstellung eines Faserverbinders mit schräg angeschliffener Endfläche einer Lichtleitfaser.

Die in Fig. 1 dargestellte Interferometeranordnung weist einen Interferometerkopf 1, eine Laserdiode 2 zur Versorgung des Interferometerkopfs 1 mit Laserlicht und eine Detektoreinrichtung 3 zur Auswertung der aus dem Interferometerkopf stammenden Interferenzsignale auf. Der Interferometerkopf 1 ist von einem Gehäuse 4 umgeben und enthält in seinem Inneren mehrere, durch monomode Glasfasern verbundene optische Komponenten, die im folgenden näher beschrieben werden. Ein Strahlteiler 5 führt das in der Lichtleitfaser 6 herangeführte Laserlicht aus der Laserdiode 2 zu einem weiteren Strahlteiler 7, der eine Aufteilung in Meß- und Referenzstrahl vornimmt. Der Meßstrahl wird über die Glasfaser 8 und die Auskoppellinse 9 (Gradientenindexlinse) auf die außerhalb des Interferometerkopfs liegende, im Umgebungsmedium verlaufende Meßstrecke geführt. Der Referenzstrahl verläuft in der Referenzfaser 10 im Interferometerkopf 1. An dem in Richtung des Doppelpfeiles 11 verschieblichen (nicht dargestellten Bauteil) ist der Retroreflektor 12 befestigt. Dieser Retroreflektor 12 reflektiert den Meßstrahl mit Strahlversatz zum Interferometerkopf 1 zurück, über eine gesonderte Einkoppellinse 13 gelangt der Meßstrahl in die Glasfaser 14. In der als Faserkoppler ausgeführten Rekombinationseinrichtung 15 werden der von der Meßstrecke zurückkehrende Meßstrahl und der in der Referenzfaser 10 geführte Meßstrahl zur Interferenz gebracht. Zwei weitere Strahlteiler 18 und 19 sind an die beiden komplementären Ausgänge 16 und 17 der Re kombinationseinrichtung 15 angeschlossen. Über Polarisationsfilter 20a bis d gelangen die fasenverschobenen Interferenzsignale in die zur Detektoreinrichtung 3 führenden Lichtleitfasern 21a bis d. Aus den vier jeweils um 90° gegeneinander phasenverschobenen Interferenzsignalen lassen sich neben dem Verschiebeweg des Retroreflektors 12 auch die Verschieberichtung und der Modulationshub des Interferenzsignals ermitteln. Die dargestellte Interferometeranordnung ist also mit zwei senkrecht aufeinanderstehenden Polarisationen betrieben. Dazu ist ein Polarisator 22 vorgesehen, um sicherzustellen, daß die zwei für den Betrieb des Interferometers erforderlichen senkrecht aufeinanderstehenden Polarisationen vorliegen. Beide Polarisationsanteile durchlaufen dieselbe Meßstrecke. Im Referenzzweig 10 ist ein λ/4-Blättchen angeordnet, um eine Polarisationsrichtung gegenüber der anderen um 90° in der Phase zu verschieben. Das λ/4-Blättchen könnte auch im Meßzweig angeordnet sein.

Die Detektoreinrichtung weist vier Photodetektoren 24a-d auf. Diese vier Photodetektoren 24a - d erzeugen aus den optischen Interferenzsignalen elektrische Interferenzsignale, die von einer Elektronikeinheit ausgewertet werden. Das Ergebnis (die Lage des Retroreflektors 12) wird über eine Anzeige 25 angezeigt.

Die Laserdiode 2 befindet sich in einem durch die wärmeisolierende Dämmwand 26 abgeteilten Gehäusebereich des Lichtquellen- und Auswertgehäuses 27. Die Emissionsfrequenz der Laserdiode 2 wird einerseits über Injektionsstrom und Temperatur und andererseits durch frequenzselektive optische Rückkopplung aus dem Etalon 28 im Interferometerkopf 1 geregelt. Zwischen den beiden etwa 5 mm beabstandeten Spiegelflächen des Etalons 28 befindet sich das auf der Meßstrecke vorhandene Umgebungsmedium, welches durch die Öffnung 29 in den Interferometerkopf eindringen kann. Das Etalon 28 weist eine Differentialdiode 29 auf, die einen Interferenzring erfaßt und in Abhängigkeit von der Lage dieses Interferenzrings über die elektrischen Leitungen 30 ein elektrisches Signal an die Laserdiodenregeleinheit 31 abgibt. Verändert sich die Brechzahl des Umgebungsmediums und damit die Luftwellenlänge im Etalon 28, so verändert sich auch die Lage des von der Differentialdiode 29 erfaßten Interferenzrings. Die Regeleinheit 31 korrigiert daraufhin über Injektionsstrom I und Laserdiodentemperatur T (Peltier-Element 31) die Betriebsparameter der Laserdiode derart, daß sich die Emissionsfrequenz gerade so ändert, daß die auf der Meßstrecke (und im Etalon 28) vorhandene Luftwellenlänge konstant bleibt. Zusätzlich zu dieser elektronischen Regelung der Emissionsfrequenz erfolgt eine optische Regelung der Laserdiode dadurch, daß in Abhängigkeit von der Brechzahl des Umgebungsmediums zwischen den Spiegelflächen des Etalons 28 Licht frequenzselektiv in die Laserdiode zurückgekoppelt wird, das die Laserdiode dazu veranlaßt, bevorzugt auf dieser Frequenz zu emittieren.

Um sicherzustellen, daß die Emissionsfrequenz der Laserdiode nicht durch unkontrollierbare frequenzselektive Rückkopplungen, wie sie z.B aus dem Quasi-Etalon zwischen der Außenfläche des Laserdiodenresonators und der ersten Spiegelfläche des Etalons 28 oder einer anderen Reflexstelle im Interferometerkopf auftreten, in unerwünschter Weise beeinflußt wird, ist gemäß der Erfindung vorgesehen, daß zwischen der Laserdiode 2 und dem Interferometerkopf 1 eine Lichtleitfaser 32 angeordnet ist, deren optische Länge mindestens einen Meter beträgt. Die monomode Lichtleitfaser 32, über die Laserlicht dem Interferometerkopf 1 zugeführt wird, und vier Kunststoff-Lichtleitfasern 33a - d über die optische Interferenzsignale aus den Lichtleitfasern 21a - d den Photodetektoren 24a - d zugeführt werden, sind zusammen mit der elektrischen Leitung 34 in einem von einem Mantel 36 umgebenen Kabel zusammengefaßt. Das Faserkabel 35 st am lichtquellenseitigen Ende über einen zwei teiligen Mehrfachfaserverbinder 37lösbar mit Lichtleitfasern bzw. elektrischen Leitungen im Lichtquellen- und Auswertgehäuse 27 verbunden. Im einzelnen ist die von der Laserdiode kommende Lichtleitfaser 38 mit der monomoden Glasfaser 33 lösbar verbunden. Die elektrischen Leitungen 34 sind mit den Leitungen 39 durch den Mehrfachstecker 37 verbunden und die vier Kunststoff-Lichtleitfasern 33 a-d des Faserkabels 35 sind über den Stecker 37 mit Lichtleitfasern verbunden, die zu den Fotodetektoren 24 a-d führen. Ein möglicher konstruktiver Aufbau des Mehrfachsteckers 37 ist weiter unten im Zusammenhang mit Fig. 5 beschrieben. Dort ist allerdings in aus Gründen der Übersichtlichkeit die einfach herzustellende elektrische Verbindung nicht dargestellt.

Am interferometerkopfseitigen Ende des Faserkabels 35 ist ein zweiter Faserverbinder 40 zur lösbaren Verbindung der Lichtleitfasern bzw. elektrischen Leitungen des Faserkabels 35 mit entsprechenden Fasern bzw. Leitungen im Interferometerkopf herzustellen. Im einzelnen wird über den Stek-ker 40 die monomode Glasfaser 32 mit der monomoden Glasfaser 6 verbunden. Außerdem erfolgt über den Mehrfachverbinder 40 eine Verbindung der elektrischen Leitungen 30 mit den elektrischen Leitungen 34 und eine optische Kopplung der Lichtleitfasern 21a-d mit den Lichtleitfasern 33 a-d des Faserkabels 35. Das Faserkabel 35 läßt sich unter Beachtung der erfindungsgemäßen optischen Mindestlänge an die jeweiligen Einsatzbedingungen einfach anpassen, ist leicht verlegbar und kann bei Beschädigungen einfach und rasch ausgetauscht werden. Dieser Austausch kann sogar vom Benutzer vorgenommen werden, da eine aufwendige Justage im Anschluß an den Austausch nicht nötig ist.

Die Fig. 2 zeigt eine alternative Möglichkeit, um die aus der Rekombinationseinrichtung 15 stammenden komplementären optischen Interferenzsignale in den beiden Glasfasern 16 und 17 auf die vier mit der Detektoreinrichtung 3 verbun denen Plastik-Lichtleitfasern 21 a-d aufzuteilen. Im Gegensatz zu der in Fig. 1 dargestellten Lösung mit den Strahlteilern 18 und 19 wird bei der Ausführungsform gemäß Fig.2 die Divergenz des aus den monomoden Glasfasern 16 und 17 austretenden Lichtkegels ausgenutzt um eine räumliche Aufteilung auf die Plastik-Lichtleitfasern 21 a-d zu erzielen. Über die Polarisatoren 20 a-d wird jeweils eine der beiden senkrechten Polarisationen in eine der beiden Lichtleitfasern 21a,b bzw. 21c,d durchgelassen. Eine solche Aufteilung der Polarisationen ist bereits im Interferometerkopf nötig, da die Kunststoff-Lichtleitfasern 21a-d die Polarisationen nicht erhalten.

Bei dem in Fig. 3 dargestellten Ausführungsbeispiel bezeichnen gleiche Bezugsziffern gleiche bzw. äquivalente Teile wie in den Fig. 1 und 2. Das Aufführungsbeispiel in Fig. 3 unterscheidet sich von dem in Fig. 1 dargestellten Ausführungsbeispiel im wesentlichen dadurch, daß die zum Interferometerkopf führende monomode Glasfaser 32 und die vom Interferometerkopf 1 zurückführenden Kunststoff- Lichtleitfasern 33 a-d nicht zu einem gemeinsamen Faserkabel zusammengefaßt sind.

Ledigleich die vier Kunststoff-Lichtleitfasern 33 a-d sind zu einem gemeinsamen Kabel 35' zusammengefaßt. Ein weiterer Unterschied zu dem in Fig. 1 dargestellten Ausführungsbeispiel besteht darin, daß das Etalon zur Erfassung der Umweltbedingungen (Brechzahl ) auf der Meßstrecke, nicht im Interferometerkopf integriert ist, sondern in einem für das gasförmige Umgebungsmedium offenen Gehäuse 28' untergebracht ist. Das im Gehäuse 25' untergebrachte Etalon ist über eine flexible monomode Glasfaser 41, deren optische Länge nach den gleichen Überlegungen wie zu der zum Interferometerkopf führenden Glasfaser 32 mindestens einen Meter beträgt, mit der Laserdiode 2 verbunden. Die Lichtaufteilung zwischen Interferometerkopf und Etalon erfolgt im Strahlteiler 42, der eine unsymmetrische Strahlaufteilung zugunsten einer höheren Intensität im Interfero meterkopf 1 bewirkt. Das Gehäuse, in dem sich das die Umweltbedingungen erfassende Etalon befindet, kann auf einfache Weise in der Nähe der Meßstrecke angeordnet werden, womit sichergestellt ist, daß auf der Meßstrecke und zwischen den Spiegelflächen des Etalons die gleichen Umweltbedingungen herrschen. Die aus einer die transversalen Interfe-renzmuster des Etalons erfassenden Differentialdio-de stammenden Interferenzsignale werden über eine elektrische Leitung 43 an das die L serdiode 2 samt zugehöriger elektronischer Regelung 31 enthaltende Gehäuse 27 geliefert. Die mehrere Adern umfassende Leitung 43 ist über lösbare Steckverbindungen 44 und 45 am Etalongehäuse 28' bzw. am Gehäuse 27 angeschlossen.

Die vier Kunststoff-Lichtleitfasern a-d, die zu einem gemeinsamen Faserkabel 35' zusammengefaßt sind, sind über zweiteilige Vierfachfaserverbinder 46 und 47 lösbar am Interferometerkopf 1 bzw. am Gehäuse 27 angeschlossen. Die Fotodetektoren 24 a-d sind günstigerweise direkt an der am Gehäuse 27 angebrachten Steckerhälfte des Vierfachfaserverbinders 46 angebracht. Die von den Fotodetektoren 24 a-d zur Auswertelektronik 3 führenden elektrischen Leitungen sowie elektrische Leitungen vom Stecker 45 zur Regelelektronik 31 und von dort zur Laserdiode bzw. zu deren Peltierelement sind der Übersichtlichkeit halber nicht dargestellt.

Die zum Etalon führende monomode Glasfaser 41 weist auf beiden Seiten einen lösbaren Faserverbinder 48 bzw. 49 auf. Um störende Rückkopplungen aus den zwischen Leserdiode 2 einerseits und reflektierenden Stellen in den Faserverbindern 48 bzw. 37' andererseits gebildeten Quasietalons zu vermeiden, ist zwischen dem Strahlteiler und der Laserdiode 2 eine spulenförmig aufgewickelte Lichtleitfaser 50 mit einer optischen Länge von mindestens einem Meter, vorzugsweise mindestens zehn Metern angeordnet. Alternativ oder zusätzlich zu dieser Maßnahme können die Faserverbinder reflexionsarm bzw. reflexionslos ausgebildet sein. Eine Möglichkeit dies zu erreichen ist in Fig. 11 dargestellt, in der der Faserverbinder 37' schematisch gezeigt ist. Die von der Laserdiode kommende monomode Glasfaser ist in der zylindrischen Verbinderhälfte 37a' geführt, während die zum Interferometerkopf 1 führende Lichtleitfaser 32 in der zweiten Steckerhälfte 37b' geführt ist. Um Reflexionen zurück in die Faser 38 zu vermeiden, ist die Faser 32 an ihrer Endfläche 32a schräg angeschliffen, sodaß der Reflex nicht mehr in die Glasfaser 38 einkoppelt. Alternative, nicht dargestellte Möglichkeiten bestünden in einer Anbringung einer entspiegelnden Schicht auf der Endfläche 32a oder in der Verwendung einer Indexflüssigkeit zwischen den zu verbindenen Endflächen der Lichtleitfasern.

Bei den bisher gezeigten Ausführungsbeispielen war die zum Interferometerkopf führende Lichtleitfaser eine monomode Glasfaser (Einmodenwellenleiter 32). Da diese wegen ihres geringen Kerndurchmessers in den Faserverbindern relativ schwierig zueinander zu justieren sind, bestünde auch die Möglichkeit, Kunststoff-Lichtleitfasern zu verwenden, die wegen ihres größeren Durchmessers wesentlich leichter richtig justiert miteinander verbindbar sind. Im Interferometerkopf wird man allerdings monomode Glasfasern vorziehen, sodaß eine Kopplungseinrichtung 51 nötig ist, um aus einer Kunststofflichtleitfaser 6' im Interferometerkopf auf eine monomode Glasfaser 6 überzugehen. Zwei Ausführungsbeispiele solcher Kopplungseinrichtungen 51 sind in den Fig. 9 und 10 dargestellt.

Bei der in Fig. 9 dargestellten Ausführungsform wird der aus der Kunststoff-Lichtleitfaser 6' austretende Lichtkegel über eine Linse 52 auf die Eintrittsfläche der Glasfaser 6 gerichtet und in diese eingekoppelt.

Bei dem in Fig. 10 dargestellten Ausführungsbeispiel verjüngt sich die Kunststoff-Lichtleitfaser 6' im Bereich der Kopplungeinrichtung in etwa auf den Durchmesser der monomoden Lichtleitfaser 6.

Das in Fig.4 dargestellteAusführungsbeispiel zeigt die Erweiterung des in Fig. 3 dargestellten Ausführungsbeispiels auf eine Interferometeranordnung mit drei identischen Interferometerköpfen 1. Bei geeigneter Anordnung der Interferometerköpfe läßt sich beispielsweise ein Dreiachssystem realisieren, mit dem die Lage eines Bauteiles im Raum erfaßbar ist. Gleiche Bezugszeichen bezeichnen gleiche oder äquivalente Teile wie in Fig. 3. Gegenüber dem in Fig. 3 dargestellten Ausführungsbeispiel unterscheidet sich das in Fig. 4 dargestellte Ausführungsbeispiel, abgesehen von der dreifachen Zahl der Interferometerköpfe dadurch, daß das Licht aus der Laserdiode 2 zunächst einem Lichtverteiler 51a zugeführt wird, der zwei Strahlteiler 52 und 53 enthält, um das Licht an seinem Eingang 54 auf die drei Ausgänge 55 gleichmäßig zu verteilen. Der Eingang 54 des Lichtverteilers 51a ist über eine Glasfaser 56,deren optische Länge vorzugsweise mindestens einen Meter beträgt, mit der von der Leserdiode 2 kommenden Faser 38 verbunden, wobei die Glasfaser 56 beidseitig mit lösbaren Faserverbindern angeschlossen ist. Die Interferometerköpfe 1 sind über lösbare Faserverbinder 37' an die Ausgänge 55 des Lichtverteilers 51a angeschlossen. Die vier,aus jedem Interferometerkopf 1 herausführenden und die optischen Interferenzsignale übertragenden Kunststoff-Lichtleitfasern 33a - d sind beim ersten Interferometerkopf mit der in im Gehäuse 27 untergebrachten Detektor- bzw. Auswerteinrichtung 3 verbunden, während die Detektor- bzw. Auswerteinrichtungen 3',3" für die beiden anderen Interferometerköpfe in gesonderten Gehäusen 27 und 27' untergebracht sind.

Das über die monomode Glasfaser 41 und die elektrische Leitung 43 an das Gehäuse 27 angeschlossene Etalongehäuse 28' wird in der Praxis in der Nähe der Meßstrecke angeord net werden, um sicherzustellen, daß zwischen den Spiegelflächen des Etalons dieselben Umweltbedingungen herrschen wie auf der Meßstrecke.

In Fig.5 ist ein Teil einer zweiteiligen Mehrfachkupplung zur Verbindung von vier Kunststoff-Lichtleitfasern und einer monomoden Glasfaser in einer perspektivischen Ansicht dargestellt. Der dargestellte Steckerteil 57 weist einen U-förmigen Grundkörper 58 auf, über dessen Hinterseite das fünf Lichtleitfasern enthaltende Faserkabel in den Steckerteil geführt ist. Der Mantel des Faserkabels ist von einer Zugentlastung 59 gehalten. Im Inneren des Steckerteiles 57 werden die zu verbindenden Kunststofflichtleitfasern 33 a-d in gesonderte parallele Bohrungen 60 a-d aufgeteilt, die zu der zum anderen (nicht dargestellten) Steckerteil weisenden Bildungsfläche 61 am Vorsprung 62 führen. Die Kunststoff-Lichtleitfasern 33 a-d schließen bündig mit der Verbindungsfläche 61 ab. Für die zentrale monomode Glasfaser 32 ist ein Präzisionsverbinder 63 in die Mehrfachkupplung 57 eingebaut. Derartige Präzisionsverbinder für monomode Glasfasern sind im Handel erhältlich. Der Steckerteil 57 ist mit einem Deckelteil 64 verschließbar.

Der zur zweiteiligen Mehrfachkupplung gehörende zweite Teil, welcher mit dem dargestellten Kupplungsteil 57 zu verbinden ist, ist im wesentlichen gleich aufgebaut, weist jedoch an Stelle des Vorsprungs eine entsprechende Vertiefung auf, an deren Hinterseite sich die Verbindungsfläche befindet, an der die Faserenden der Kunststoff-Lichtleitfasern 33 a-d bündig enden. In dieser Hinterfläche ist auch der den Präzisionsverbinder 63 für die monomode Glasfaser entsprechende zweite Teil angeordnet. Durch die unsymmetrische Ausbildung des Vorsprungs 62 läßt sich die zweiteilige Mehrfachkupplung nur in der richtigen Weise zusammenfügen. Über die Schraube 65 und ein entsprechendes Gewinde im nicht dargestellten Teil der Mehrfachkupplung lassen sich die beiden Teile der Mehrfachkupplung miteinander neben der formschlüssigen Verbindung über den Vorsprung 62 und die entsprechende Ausnehmung im anderen Teil zusätzlich mechanisch miteinander verbinden.

Der in Fig. 6 dargestellte Teil einer zweiteiligen Mehrfachkupplung für Lichtleitfasern ist im wesentlichen gleich aufgebaut wie der in Fig. 5 dargestellte Teil. Der wesentliche Unterschied besteht darin, daß das Ausführungsbeispiel gemäß Fig. 6 zur Verbindung von fünf Kunststoff-Lichtleitfasern vorgesehen ist, weshalb an Stelle der Präzisionsverbindung 32 gemäß Fig. 5 lediglich eine fünfte Bohrung 60e vorgesehen ist, durch die die fünfte Kunststoff-Lichtleitfaser (nicht dargestellt) geführt ist.

Die in den Fig. 5 und 6 dargestellten Flachstecker eignen sich insbesondere wegen ihrer geringen Höhe zum Anschluß an die kompakten, eine geringe Höhe aufweisenden Interferometerköpfe 1. Grundsätzlich sind jedoch auch Rundstecker möglich, wie dies in Fig. 7 dargestellt ist. Die Fig. 7 zeigt eine schematische Ansicht auf eine Hälfte eines zweiteiligen Rundsteckers. In der Mitte befindet sich die monomode Glasfaser 32, die von den vier Kunststoff-Lichtleitfasern 33 a-d umgeben ist. Mit diesem Stecker gemäß Fig. 7 sind außerdem noch vier elektrische Leitungen 34 a-d verbindbar. Ein Vorsprung 66 und eine entsprechende Ausnehmung im nicht dargestellten zweiten Steckerteil stellen sicher, daß die beiden Steckerhälften unverwechselbar miteinander in der richtigen Weise miteinander verbindbar sind.

In Fig. 8 ist eine alternative Anordnung der Lichtleitfasern bzw. elektrischen Leitungen in einer Steckerhälfte eines zweiteiligen Mehrfachsteckers dargestellt.

Durch den Anschluß des Interferometerkopfes 1 bzw. der Interferometerköpfe 1 mit lösbaren Faserverbindern und Lichtleitfasern ist es auf einfache Weise möglich, an Stelle der heute gebräuchlichen, im Infraroten emittierende Laserdioden eine im Sichtbaren emittierende Lichtquelle kurzzeitig zu Justagezwecken anzuschließen. Wie bereits erwähnt, beschränkt sich die Justage im wesentlichen darauf, den Retroreflektor 12 so zu justieren, daß der Meßstrahl auf die Einkoppellinse 13 fällt, und Licht in die Glasfaser 14 eingekoppelt wird. Diese Justage wird durch sichtbares Licht erleichtert. Nachdem die Justierung abgeschlossen ist, wird die sichtbare Laserlicht emittierende Lichtquelle (beispielsweise ein Helium-Neon-Laser) wieder entfernt und die für den eigentlichen Betrieb vorgesehene Laserdiode über die Lichtleitfaser und die lösbaren Faserverbinder angeschlossen. Diese Justierhilfe mit sichtbarem Licht, etwa aus einem Helium-Neon-Laser, ist insbeonsere deshalb sinnvoll, weil praktisch alle momentan gebräuchlichen Laserdioden im Infraroten arbeiten und noch kaum praktisch anwendbar bzw. nur teure, im Sichtbaren emittierende Laserdioden erhältlich sind. Grundsätzlich können bei der erfindungsgemäßen Interferometeranordnung zur laufenden betriebsmäßigen Versorgung mit Laserlicht natürlich auch im Sichtbaren emittierende Laserdioden eingesetzt werden.

## Ansprüche

1. Interferometeranordnung, insbesondere zur Entfernungsbzw. Verschiebewegbestimmung eines beweglichen Bauteiles, mit einer Laserdiode als Lichtquelle, mit wenigstens einem Interferometerkopf, der zumindest einen Strahlteiler zur Aufteilung von aus der Laserdiode stammendem Licht in einen Meßstrahl und einen Referenzstrahl und eine Rekombinationseinrichtung enthält, an der der über Referenzstrecke geführte Referenzstrahl und der über einen beweglichen Meßspiegel geführte Meßstrahl interferieren, und mit einer wenigstens einen Photodetektor aufweisenden Detektoreinrichtung zur Analyse zumindest eines aus der Rekombinationseinrichtung stammenden optischen Interferenzsignals, dadurch gekennzeichnet, daß zwischen Laserdiode (2) und jedem Interferometerkopf (1) eine flexible Lichtleiterfaser (32) mit einer optischen Länge von mindestens einem Meter angeordnet ist, über welche dem jeweiligen Interferometerkopf (1) von der Laserdiode (2) emittiertes Licht zugeführt wird, daß für jede Lichtleitfaser (32) ein erster Faserverbinder (37 bzw. 37') vorgesehen ist, um das lichtquellenseitige Ende der Lichtleitfaser (32) mit einer Licht aus der Laserdiode (2) führenden Lichtleitfaser (38) lösbar zu verbinden, und daß für jede Lichtleitfaser (32) ein zweiter Faserverbinder (40, 40') vorgesehen ist, um das interferometerkopfseitige Ende der Lichtleitfaser (32) mit einer zum bzw. im jeweiligen Interferometerkopf (1) verlaufenden Lichtleitfaser (6) lösbar zu verbinden.

2. Interferometeranordnung nach Anspruch 1, dadurch gekennzeichnet, daß die optische Länge jeder solchen Lichtleitfaser (32) mindestens 5 Meter beträgt.

3. Inteferometeranordnung nach Anspruch 1, dadurch gekennzeichnet, daß die optische Länge jeder solchen Lichtleitfaser (32) mindestens 10 Meter beträgt.

4. Interferometeranordnung nach einem der Ansprüche 1 bis 3, dadurch gekennzeichnet, daß zumindest im bzw. in den lichtquellenseitigen Faserverbinder(n) (37 bzw. 37') die Endfläche (32a) der von Lichtquelle (2) abgewandten Lichtleitfaser (32) einen spitzen Winkel mit der Normalebene auf die Faserrichtung einschließt.

5. Interferometeranordnung nach Anspruch 4, dadurch gekennzeichnet, daß das Ende der Lichtleitfaser (32) schräg angeschliffen ist.

6. Interferometeranordnung nach einem der Ansprüche1 bis 5, dadurch gekennzeichnet, daß zumindest im bzw. in den lichtquellenseitigen Faserverbinder(n) die Endfläche der von Lichtquelle abgewandter Lichtleitfaser mit einer entspiegelnden Schicht versehen ist.

7. Interferometeranordnung nach einem der Ansprüche 1 bis 6, dadurch gekennzeichnet, daß zumindest im bzw. in den lichtquellenseitigenFaserverbinder(n) zwischen den Endflächen der jeweils zu verbindenden' Lichtleitfasern eine Indexflüssigkeit eingebracht ist.

8. Interferometeranordnung nach einem der Ansprüche 1 bis 7, dadurch gekennzeichnet, daß von der Laserdiode (2 ) aus bis zum nächstliegenden Faserverbinder (37' bzw. 48) eine Lichtleitfaser(50)- mit einer optischen Länge von mindestens einem Meter, vorzugsweise mindestens 10 Meter, angeordnet ist.

9. Interferometeranordnung nach Anspruch 8, dadurch gekennzeichnet, daß die Lichtleitfaser (50) zumindest teilweise spulenförmig aufgewickelt ist.

10. Interferometeranordnung nach einem der Ansprüche 1 bis 9, dadurch gekennzeichnet, daß die zum Interferometerkopf (1) bzw. den Interferometerköpfen (1) führende Lichtleitfaser jeweils eine monomode Glasfaser (32) ist.

11. Interferometeranordnung nach einem der Ansprüche 1 bis 9, dadurch gekennzeichnet, daß die zum Interferometerkopf (1) bzw. den Interferometerköpfen (1) führende Lichtleitfaser jeweils eine flexible multimode Lichtleitfaser, insbesondere eine Kunststoff-Lichtleitfaser ist.

12. Interferometeranordnung nach Anspruch 11, dadurch gekennzeichnet, daß im Interferometerkopf monomode Lichtleiter (6,8,10,14,16,17) verwendet sind und im Bereich des Interferometerkopfes (1) eine Kopplungseinrichtung (51) zur Einkopplung von Licht aus der multimoden Lichtleitfaser (6') in einen monomoden Lichtleiter (6) des Interferometerkopfes (1) angeordnet ist.

13. Interferometeranordnung nach Anspruch 12, dadurch gekennzeichnet, daß die Kopplungseinrichtung (51) eine Linse(nanordnung) (52) aufweist, die das aus der multimoden Lichtleitfaser (6') divergent austretende Licht auf die Eintrittsfläche des monomoden Lichtleiters ( 6) fokussiert.

14. Interferometeranordnung nach Anspruch 12, dadurch gekennzeichnet, daß sich der Durchmesser der multimoden Lichtleitfaser (6') im Bereich der Kopplungseinrichtung (51) in etwa auf den Durchmesser des monomoden Lichtleiters (6) verringert.

15. Interferometeranordnung nach einem der Ansprüche 1 bis 14, dadurch gekennzeichnet, daß jeder Interferometerkopf (1) ein Gehäuse (4) aufweist und der interferometerkopfseitige Teil des zweiteilig ausgeführten Faserverbinders (40 bzw. 40') jeweils an diesem Gehäuse (4) fest angebracht ist.

16. Interferometeranordnung nach einem der Ansprüche 1 bis 15, dadurch gekennzeichnet, daß der bzw. die lichtquellenseitigen Faserverbinder (37bzw. 37') zweiteilig ausgeführt ist (sind) und der lichtquellenseitige Teil jeweils an einem die Laserdiode (2) umgebenden Gehäuse (27) bzw. einem Gehäuse eines Lichtverteilers (51a) fest angebracht ist.

17. Interferometeranordnung nach einem der Ansprüche 1 bis 16, dadurch gekennzeichnet, daß pro Interferometerkopf (1) mindestens eine über Faserverbinder (40 bzw.47) lösbar angeschlossene multimode Lichtleitfaser, insbesondere Kunststoff-Lichtleitfaser (33a-d) zur Übertragung optischer Interferenzsignale zur vom Interferometerkopf (1) räumlich getrennten mit mindestens einem Photodetektor (24a-d) und einer Auswertelektronik versehenen und vorzugsweise in einem Gehäuse (27) untergebrachten Detektoreinrichtung (3) vorgesehen ist.

18. Interferometeranordnung nach Anspruch 17, dadurch gekennzeichnet, daß von einem Interferometerkopf (1) mehrere interferenzsignalübertragende multimoden Lichtleitfasern (33a-d) zur Detektoreinrichtung (3) führen und diese Lichtleitfasern (33a-d) zu einem Faserkabel (35') mit einem die Lichtleitfasern (33a-d) umgebenden Mantel zusammengefaßt sind.

19. Interferometeranordnung nach Anspruch 17 oder 18, dadurch gekennzeichnet, daß die Licht zum Interferometerkopf (1) führende Lichtleitfaser (32) und die vom Interferometerkopf (1) aus Interferenzsignale übertragende(n) multimode Lichtleitfaser(n) (33a-d) zueinem Faserkabel (35) mit einem die Lichtleitfasern (33a-d,32) umgebenden Mantel (36) zusammengefaßt sind.

20. Interferometeranordnung nach Anspruch 18 oder 19, dadurch gekennzeichnet, daß das gemeinsame Faserkabel (35) zumindest am Interferometerkopf (1) und vorzugsweise auch am lichtquellen- bzw. detektorseitigen Ende über eine zweiteilige lösbare Mehrfachkupplung (37,40) zur gleichzeitigen Verbindung von Lichtfasern (32,33a-d) anschließbar ist.

21. Interferometeranordnung nach Ansprch 20, dadurch gekennzeichnet, daß die Mehrfachkupplung (37,40 bzw. 57)zwei unverwechselbar mechanisch ineinanderpassende Steckerteile aufweist, wobei die Lichtleitfasern (32,33a-d) des Faserkabels (35) in jedem Steckerteil aufgeteilt und zumindest die zu verbindenden multimoden Lichtleitfasern, insbesondere Kunststoff-Lichtleitfasern (33a-d) in gesonderen parallelen Bohrungen (60a-d) zu der zum anderen Steckerteil weisenden Verbindungsfläche (61) geführt sind.

22. Interferometeranordnung nach Anspruch 21, dadurch gekennzeichnet, daß die über die Mehrfachkupplung (57) zu verbindenden multimoden Lichtleitfasern (33a-d) bündig mit der Verbindungsfläche (61) abschließen und die Verbindungsflächen zweier verbundener Steckerteile aneinanderliegen.

23. Interferometeranordnung nach Anspruch 20 bis 22, dadurch gekennzeichnet, daß die Mehrfachkupplung als zweiteiliger Flachstecker (37,40) ausgeführt ist.

24. Interferometeranordnung nach einem der Ansprüche 21 bis 23, dadurch gekennzeichnet, daß die beiden Teile der Mehrfachkupplung (37,40,57) miteinander neben einer formschlüssigen Verbindung, die eine relative Justierung der optisch verbindenden Faserenden sicherstellt, in Verbindungsrichtung zusätzlich mechanisch verbindbar, vorzugsweise verschraubbar sind.

25. Interferometeranordnung nach Anspruch 8 und einem der Ansprüche 20 - 24, dadurch gekennzeichnet, daß in die zweiteilige Mehrfachkupplung (57) ein Präzisionsverbinder (63) für monomode Glasfasern (32) eingebaut ist.

26. Interferometeranordnung nach einem der Ansprüche 20 bis 25, dadurch gekennzeichnet, daß im Faserkabel (35) auch elektrische Leitungen (34) geführt sind und über die Mehrfachkupplung (37,40) auch diese elektrischen Leitungen (34) verbindbar sind.

27. Interferometeranordnung nach einem der Ansprüche 17 bis 26, dadurch gekennzeichnet, daß die optischen Interferenzsignale im Interferometerkopf (1) nach der Rekombinationseinrichtung (15) in mindestens einer monomoden Glasfaser (16,17) geführt sind, daß diese Glasfaser(n) im Interferometerkopf (6,17) frei enden, und daß ein divergenter Austrittskegel jeder monomoden Glasfaser(16,17) das Eintrittsende mindestens einer zur Detektoreinrichtung (3 ) führenden multimoden Kunststoff-Lichtleitfaser, insbesondere Kunststoff-Lichtleitfaser (21a-d) angeordnet ist.

28. Interferometeranordnung nach Anspruch 27, dadurch gekennzeichnet, daß pro monomoder Glasfaser (17,17) zwei multimode Lichtleitfasern (21a,b bzw. 21c,d) vorgesehen sind und im Austrittskegel der Glasfaser (16,17) vor den Eintrittsenden der multimoden Lichtleitfasern (21a-d) jeweils ein Polarisator (20a-d) angeordnet ist.

29. Interferometeranordnung nach einem der Ansprüche 1 bis 28, dadurch gekennzeichnet, daß über einen lösbaren Faserverbinder eine an eine Lichtleitfaser angeschlossene, sichtbares Licht emittierende Laserlichtquelle zeitweise an mindestens einen Interferometerkopf anschließbar ist.

Fig. 1

Fig. 2

EP 0 401 694 A1

# Fig.3

Fig. 4

Fig. 5

Fig. 6

64

57

62

60d
60c
60e
60b
61
60a

35

58

Fig. 7

66
33b
34a
34b
33a
33c
32
34c
34d
33d

Fig.8

34c
33d
34b
34a
33c
33a
34d
33b
32

Fig. 9

51
6
6'
52

Fig. 10

51
6
6'

Fig. 11

32a
37b'
38
32
37a'
37

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | US - A - 4 627 731 (WATERS) * Gesamt; insbes. Spalte 3, Zeilen 29-49 * | 1,2,3 | G 01 B 9/02 |
| A | US - A - 4 652 129 (MARTINELLI) * Gesamt * | 1 | |
| A | US - A - 4 767 210 (KASHYAP) * Fig. 2,3; Spalte 4, Zeilen 50-57 * | | |
| A | US - A - 4 420 260 (MARTINELLI) * Gesamt * | | |
| A | US - A - 4 596 466 (ULRICH) * Zusammenfassung; Fig. 1, 4 * | | |

RECHERCHIERTE
SACHGEBIETE (Int Cl⁵)

G 01 B 9/00
G 01 B 11/00
G 01 J 9/00

Der vorliegende Recherchenbericht wurde für alle Patentansprüche erstellt.

| Recherchenort | Abschlußdatum der Recherche | Prüfer |
|---|---|---|
| WIEN | 31-08-1990 | TOMASELLI |